# EUROPEAN PATENT SPECIFICATION

(11) **EP 0 781 699 B1**
(45) Date of publication and mention of the grant of the patent: **21.06.2000**
(21) Application number: 96203593.7
(22) Date of filing: 18.12.1996
(51) Int. Cl.: B62D 49/06, B62D 61/10

(54) **Self-propelling vehicle**
Selbstangetriebenes Fahrzeug
Véhicule automotrice

(30) Priority: 27.12.1995 NL 1001994
(43) Date of publication of application: 02.07.1997
(73) Proprietor: VREDO BEHEER B.V., NL-6669 DJ Dodewaard (NL)
(72) Inventor: De Vree, Johannes, 6669 DJ Dodewaard (NL)
(74) Representative: Hoijtink, Reinoud

(56) References cited:
- DE-A- 3 608 527
- DE-U- 9 310 080
- FR-A- 2 460 095
- US-A- 3 899 037

## Description

The invention relates to a self-propelling vehicle, particularly for use on agricultural land, for instance grassland, provided with a plurality of wheel pairs, wherein the wheels of each pair are coupled by a shaft, and with drive means coupled to at least one wheel pair.

Such a self-propelling vehicle is used for instance to drive a liquid manure tank for applying manure to grassland or the like.

Such vehicles must also be suitable for travel on the public highway. The load of such vehicles, particularly for instance in the case of tanks of relatively large capacity, is comparatively high. Multi-shaft vehicles are therefore often used. At such a high load the wheel pressure is high, which, particularly on agricultural land, for instance grassland, can cause damage. In addition to the great shaft pressure, there is also the drawback that the wheels located behind each other in one line each follow the same track so that the same ground surface is loaded a number of times in succession.

A self-propelling vehicle is known from DE-A-36 08 527 wherein the track width of the wheels forming a pair can be mutually altered. This requires a complex construction in respect of the displacement of the wheels and the driving thereof.

FR-A-24 60 095 shows a vehicle driven via a gear rack wherein the track width of a wheel pair can be mutually adjusted. Such a rack drive is disadvantageous in view of pollution and the like.

US-A-3 899 037 likewise shows a vehicle construction wherein the mutual distance of wheels forming a pair can be changed using a hydraulically driven guide system consisting of lever arms.

The invention has for its object to obviate this drawback and to provide a self-propelling vehicle which is suitable for travel both on the public highway and on for instance agricultural land.

This is achieved according to the invention in that at least one of the wheel pairs is displaceable in the direction roughly transversely of the longitudinal direction of the vehicle.

According to the invention it becomes possible during use on agricultural land to displace the relevant wheel pair in transverse direction of the vehicle such that the track followed by this wheel pair does not coincide with the track followed by other wheels. Thus is achieved that the ground surface is loaded only once. During travel on the public highway the wheels can then be directed in the usual manner in a line lying parallel to the longitudinal direction of the vehicle so that a vehicle with normal track width is obtained.

The wheel pair is preferably displaceable between a position located in the line of the other wheel pairs and a position varying therefrom. In the position not located in the line of the other wheel pairs the wheel pair follows a non-overlapping track parallel to the track followed by these wheel pairs. Thus is achieved that the wheels of for instance three wheel pairs follow parallel, mutually adjacent, non-overlapping tracks, so that an optimum loading of the ground surface is achieved.

In preference two wheel pairs are displaceable in roughly transverse direction and the wheel pairs are connected by a connecting rod pivotable round a pivot point located between these wheel pairs.

Control means for these wheels of each pair are connected to the connecting rod such that during pivoting the wheels are also pivoted such that the wheels are directed in longitudinal direction of the vehicle. Hereby achieved is that, irrespective of the pivoted position, the wheels are directed in longitudinal direction of the vehicle and the vehicle can therefore also be driven in the usual manner in intermediate positions.

The displacement of the wheel pairs is controlled by hydraulic means.

For control purposes angular position sensors are connected to wheels and the output of the angular position sensor is connected to an electronic control circuit.

With reference to the embodiment of the annexed drawings the invention will be further elucidated. In the drawings:

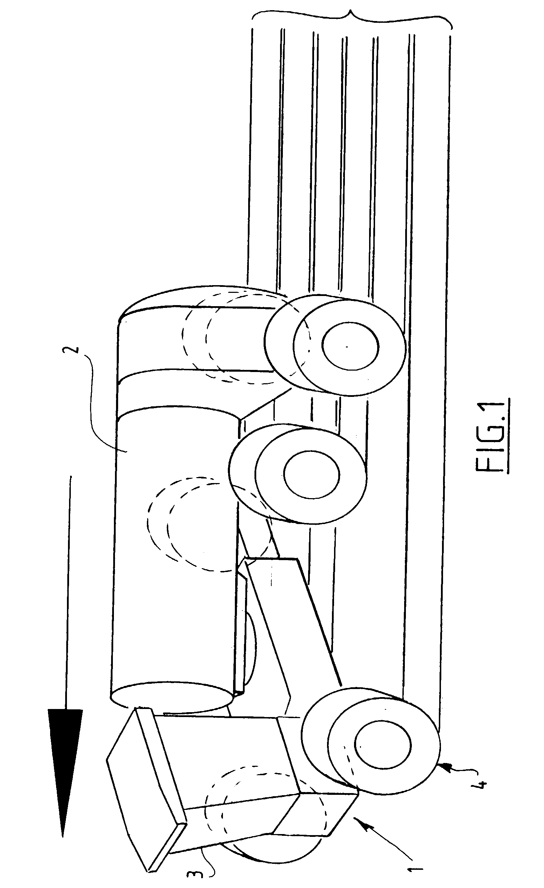

figure 1 shows a perspective view of a vehicle according to the invention,
figure 2 shows a schematic top view of the wheel pairs supporting the vehicle in a position suitable for travelling on the public highway,
figure 3 shows a schematic top view as according to figure 2 in the position suitable for travelling on agricultural land, and
figure 4 is a schematic view of the control system for the vehicle according to the invention.

The vehicle 1 according to the invention is used to carry a tank 2 for transporting liquid manure for applying to agricultural land, for instance grassland. Vehicle 1 is provided in the usual manner with a cab 3 for the driver and has a front wheel pair 4, the wheels of which are rotatable parallel to each other in order to provide the direction of the vehicle in the usual manner.

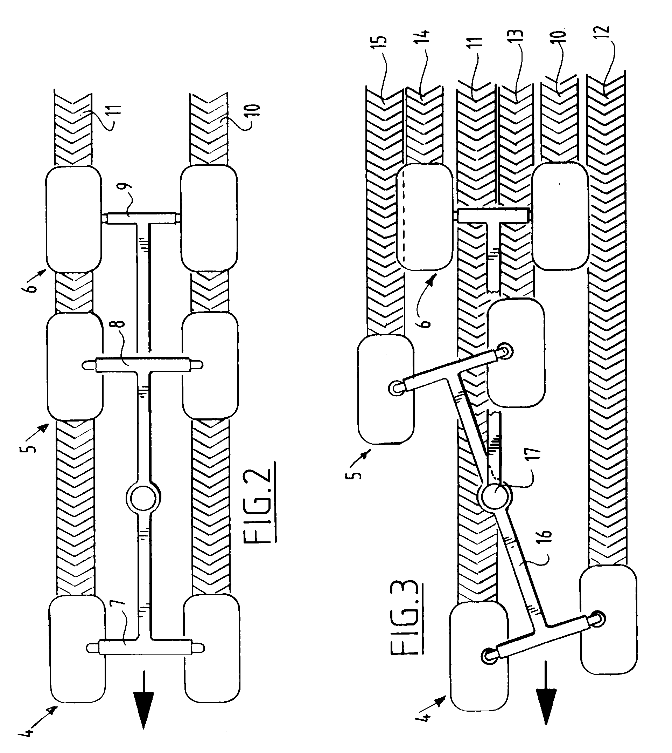

According to figure 2 three wheel pairs 4,5,6 are present which are connected in each case by a shaft 7, 8, 9 respectively. In figure 2, in the position which is suitable for travel on the public highway, all wheels lie in one line in the customary manner and each track 10, 11 respectively is therefore loaded by wheels three times in succession.

In the position of figure 3 the wheel pairs 4 and 5 are displaced in roughly transverse direction such that they now follow tracks 12, 13, 14 and 15 respectively. These tracks run parallel to the tracks 10 and 11 but do not overlap them. Each track 10 and 15 is therefore loaded only once so that the load on the ground surface has been reduced by two-thirds compared to the arrangement of figure 2.

The position of figure 3 is suitable for use on agricultural land, for instance grassland.

The wheel pairs 4 and 5 are joined by the connecting rod 16 which is pivotable round a point of rotation 17 located between the wheel pairs.

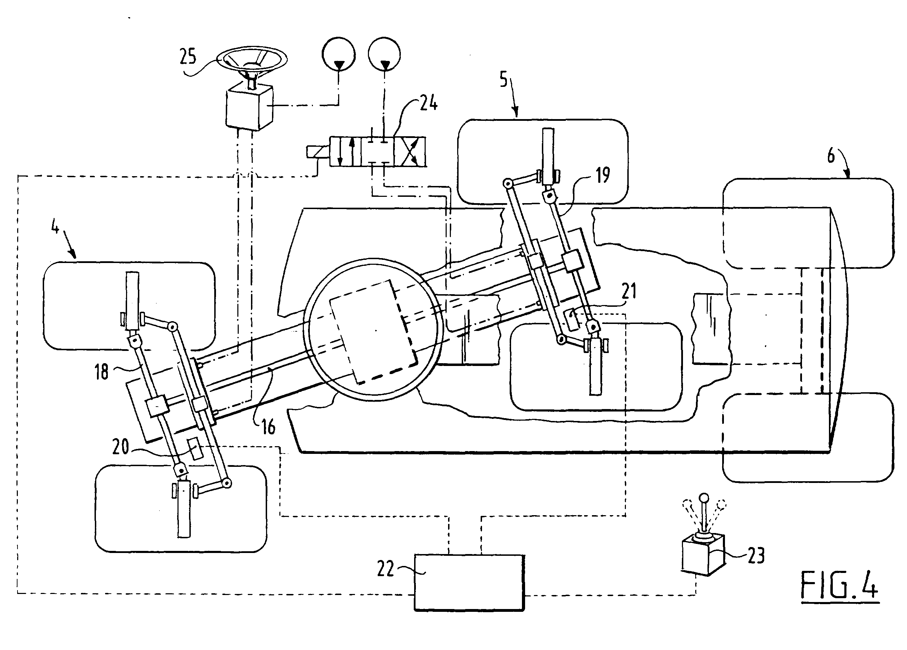

As shown in figure 4, the wheel pairs 4, 5 respectively are coupled to the connecting rod 16 via a rod assembly 18, 19 respectively. This ensures that, irrespective of the position of rod 16, the wheels of the pair 4, 5 respectively are directed mutually parallel and parallel to the wheel pair 6 and in longitudinal direction of the vehicle. On each wheel pair 4, 5 respectively are arranged angular position sensors 20, 21 respectively, the output of which is connected to an electronic circuit 22. This latter is further connected to a control handle 23 for picking up and processing control signals. Arranged on the output of electronic circuit 22 is a control line which is connected to a hydraulic valve system 24. This valve system is connected to a source of hydraulic fluid and is operated on the basis of the control signals coming from control handle 23 respectively electronic circuit 22, the position of connecting rod 16 and therefore the position of the wheel pairs 4, 5 respectively. By means of the steering wheel 25, which is connected to a source of hydraulic pressure fluid, the position of the wheels of the front wheel pair 4 is determined in the usual manner by means of hydraulic motors for the purpose of controlling the vehicle.

It is noted that in addition to the coupling between two wheel pairs it is also possible to couple a wheel pair to a shaft with one wheel such that when the wheel pair is displaced the single wheel is also displaced.

It is further noted that the effect according to the invention is also achieved when there is a small overlap of adjacent tracks.

## Claims

1. Self-propelling vehicle, particularly for use on agricultural land, for instance grassland, provided with a plurality of wheel pairs (4, 5, 6), wherein the wheels of each pair are coupled by a shaft (18, 19), and with drive means coupled to at least one wheel pair, **characterized in that** at least one of the wheel pairs is displaceable in a direction roughly transversely of the longitudinal direction of the vehicle.

2. Self-propelling vehicle as claimed in claim 1, **characterized in that** the wheel pair is displaceable between a position located in the line of the other wheel pairs and a position varying therefrom.

3. Self-propelling vehicle as claimed in claims 1-2, **characterized in that** in the position not located in the line of the other wheel pairs the wheel pair follows a non-overlapping track parallel to the track followed by these wheel pairs.

4. Self-propelling vehicle as claimed in claims 1-3, **characterized in that** two wheel pairs are displaceable in roughly transverse direction and these wheel pairs are connected by a connecting rod (16) pivotable round a pivot point located between these wheel pairs.

5. Self-propelling vehicle as claimed in claims 1-4, **characterized in that** the wheels follow parallel, adjacent tracks in the position pivoted in transverse direction.

6. Self-propelling vehicle as claimed in claims 1-5, **characterized in that** control means (22, 24) for the wheels of each pair are connected to the connecting rod such that during pivoting the wheels are also pivoted such that the wheels are always directed in longitudinal direction of the vehicle.

7. Self-propelling vehicle as claimed in claims 1-6, **characterized in that** the displacement of the wheel pairs is controlled by hydraulic means (24).

8. Self-propelling vehicle as claimed in claims 1-7, **characterized in that** angular position sensors (21) are connected to wheels and the output of the angular position sensors is connected to an electronic control circuit.

9. Self-propelling vehicle as claimed in claims 1-3, **characterized in that** the wheel pair is coupled to a shaft bearing one wheel such that during displacement of the wheel pair the shaft bearing one wheel is also displaced in roughly transverse direction.

## Patentansprüche

1. Selbstangetriebenes Fahrzeug, insbesondere für die Verwendung in landwirtschaftlichem Gebiet, beispielsweise auf einer Wiese bzw. Weide, mit einer Vielzahl von Radpaaren (4, 5, 6), wobei die Räder jedes Radpaares mit einer Welle bzw. Achse (18, 19) verbunden sind,
und mit einer Antriebseinrichtung, die mit zumindest einem Radpaar gekoppelt ist,
**dadurch gekennzeichnet,** dass zumindest eines der Radpaare in einer Richtung etwa quer zur Längsrichtung des Fahrzeugs verschiebbar ist.

2. Selbstangetriebenes Fahrzeug nach Anspruch 1, **dadurch gekennzeichnet,** dass das Radpaar zwischen einer in Reihe zu den anderen Radpaaren liegenden Stellung und einer davon verschiedenen Stellung verschiebbar ist.

3. Selbstangetriebenes Fahrzeug nach den Ansprüchen 1 - 2, **dadurch gekennzeichnet,** dass das Radpaar in der Stellung, in der es mit den anderen Radpaaren nicht in Reihe liegt, einer nicht-überlappenden Spur nachläuft, die parallel zu der Spur verläuft, denen die betreffenden Radpaare folgen.

4. Selbstangetriebenes Fahrzeug nach den Ansprüchen 1 - 3, **dadurch gekennzeichnet,** dass zwei Radpaare etwa in Querrichtung verschiebbar sind und dass diese Radpaare durch eine Verbindungsstange (16) verbunden sind, die um einen Schwenkungspunkt herum schwenkbar ist, der zwischen diesen Radpaaren liegt.

5. Selbstangetriebenes Fahrzeug nach den Ansprüchen 1 - 4, **dadurch gekennzeichnet,** dass die Räder parallelen, benachbarten Spuren in der Stellung nachlaufen, in der sie in der Querrichtung geschwenkt sind.

6. Selbstangetriebenes Fahrzeug nach den Ansprüchen 1 - 5, **dadurch gekennzeichnet,** dass Steuereinrichtungen (22, 24) für die Räder jedes Radpaares mit der Verbindungsstange derart verbunden sind, dass während des Schwenkens die Räder ebenfalls derart geschwenkt werden, dass die betreffenden Räder stets in Längsrichtung des Fahrzeugs ausgerichtet sind.

7. Selbstangetriebenes Fahrzeug nach den Ansprüchen 1 - 6, **dadurch gekennzeichnet,** dass die Verschiebung der Radpaare durch hydraulische Einrichtungen (24) gesteuert wird.

8. Selbstangetriebenes Fahrzeug nach den Ansprüchen 1 - 7, **dadurch gekennzeichnet,** dass Winkelpositions-Sensoren (21) mit Rädern verbunden sind und dass die Winkelpositions-Sensoren ausgangsseitig mit einer elektronischen Steuerschaltung verbunden sind.

9. Selbstangetriebenes Fahrzeug nach den Ansprüchen 1 - 3, **dadurch gekennzeichnet,** dass das Radpaar mit einer ein Rad tragenden Welle bzw. Achse derart verbunden ist, dass während der Verschiebung des Radpaares die das eine Rad tragende Welle bzw. Achse ebenfalls etwa in Querrichtung verschoben wird.

## Revendications

1. Véhicule autopropulsé, en particulier pour l'utilisation sur un terrain agricole, par exemple une pairie, équipé d'une pluralité de paires de roues (4, 5, 6), dans lequel les roues de chaque paire sont accouplées par un essieu (18, 19) et de moyens d'entraînement accouplés à au moins une paire de roues, caractérisé en ce qu'au moins une des paires de roues peut être déplacée dans une direction approximativement transversale à la direction longitudinale du véhicule.

2. Véhicule autopropulsé selon la revendication 1, caractérisé en ce que la paire de roues peut être déplacée entre une position située dans l'alignement des autres paires de roues et une position qui en diffère.

3. Véhicule autopropulsé selon les revendications 1 et 2, caractérisé en ce que, dans la position qui n'est pas dans l'alignement des autres paires de roues, la paire de roues suit une trace sans recouvrement, parallèle à la trace suivie par ces autres paires de roues.

4. Véhicule autopropulsé selon les revendications 1 à 3, caractérisé en ce que deux paires de roues peuvent être déplacées dans une direction approximativement transversale et sont reliées par une barre d'accouplement (16) qui peut pivoter autour d'un point de pivotement situé entre ces paires de roues.

5. Véhicule autopropulsé selon les revendications 1 à 4, caractérisé en ce que les roues suivent des traces parallèles, adjacentes, dans la position tournée dans la direction transversale.

6. Véhicule autopropulsé selon les revendications 1 à 5, caractérisé en ce que des moyens de commande (22, 24) prévus pour les roues de chaque paire sont connectés à la barre d'accouplement de telle sorte que pendant le pivotement, les roues sont aussi tournées de manière que les roues soient toujours dirigées dans la direction longitudinale du véhicule.

7. Véhicule autopropulsé selon les revendications 1 à 6, caractérisé en ce que le déplacement des paires de roues est commandé par des moyens hydrauliques (24).

8. Véhicule autopropulsé selon les revendications 1 à 7, caractérisé en ce que des capteurs de position angulaire (21) sont connectés aux roues et en ce que la sortie des capteurs de position angulaire est connectée à un circuit de commande électronique.

9. Véhicule autopropulsé selon les revendications 1 à 3, caractérisé en ce que la paire de roues est accouplée à un essieu qui porte une roue, de telle manière que, pendant le déplacement de la paire de roues, l'essieu portant une roue soit aussi déplacé dans une direction approximativement transversale.
